# EUROPÄISCHE PATENTSCHRIFT

(11) **EP 2 988 182 B1**
(45) Veröffentlichungstag und Bekanntmachung des Hinweises auf die Patenterteilung: **16.05.2018**
(21) Anmeldenummer: 15183161.7
(22) Anmeldetag: 15.03.2012
(51) Int. Cl.: G05B 19/042

(54) **VORRICHTUNG UND SYSTEM ZUR BESTIMMUNG, OPTIMIERUNG ODER ÜBERWACHUNG ZUMINDEST EINER PROZESSGRÖSSE**
DEVICE AND SYSTEM FOR DETERMINING, OPTIMISING OR MONITORING AT LEAST ONE PROCESS VARIABLE
DISPOSITIF ET SYSTEME DE DETERMINATION, D'OPTIMISATION OU DE SURVEILLANCE D'AU MOINS UNE GRANDEUR DE PROCESSUS

(30) Priorität: 07.04.2011 DE 102011006989
(43) Veröffentlichungstag der Anmeldung: 24.02.2016
(62) Teilanmeldung aus: 12712991.4
(73) Patentinhaber: Endress+Hauser SE+Co. KG, 79689 Maulburg (DE)
(72) Erfinder: Altendorf, Matthias, 79539 Lörrach (DE); Baret, Marc, 68680 Kembs (FR)
(74) Vertreter: Andres, Angelika Maria

(56) Entgegenhaltungen:
- WO-A2-2004/038934
- DE-A1-102007 049 523

## Beschreibung

Die Erfindung betrifft eine Vorrichtung zur Bestimmung, Optimierung oder Überwachung zumindest einer Prozessgröße. Weiterhin wird ein System vorgestellt, das u.a. bevorzugt eine Vielzahl der zuvor genannten Vorrichtungen umfasst.

In der Automatisierungstechnik, insbesondere in der Prozessautomatisierungstechnik, werden vielfach Feldgeräte eingesetzt, die zur Bestimmung, Optimierung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, usw., welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein Geräte verstanden, die auf der Feldebene angeordnet sind. Eine Vielzahl solcher Feldgeräte wird von der Firma Endress + Hauser hergestellt und vertrieben.

Aus der EP 1 629 331 A1 ist ein variables Feldgerät für die Prozessautomatisierungstechnik bekannt geworden, dessen einzelne Funktionen verteilt angeordnet sind. Das eigentliche Feldgerät stellt nur wenige Grundfunktionen, z.B. die Messwerterzeugung bereit, während anwendungsspezifische Funktionalitäten, wie z.B. Frequenz- oder Impulsausgänge als separate Funktionseinheiten ausgebildet sind, die vom Feldgerät räumlich getrennt angeordnet sind. Feldgeräte und Funktionseinheiten sind zwecks Daten-Funktionseinheiten sind zwecks Daten-austausch an ein entsprechendes Kommunikationsmedium angeschlossen. Bei dem Kommunikationsmedium handelt es sich um eine Zweileiter-versorgungsleitung. Alternativ sind auf dem Kommunikationsmedium mehrere Datenkanäle vorgesehen, so dass ein Mehrfachzugriff auf die angeschlossenen Einheiten möglich ist. Hierdurch ist das das Feldgerät variabel und anwendungsspezifisch konfigurierbar.

Aus der DE 10 2006 016 381 A1 ist eine Messvorrichtung zur Bestimmung und/oder Überwachung mindestens einer Prozessgröße bekannt geworden, wobei die Messvorrichtung als integrale Bestandteile eine Sensoreinheit, eine Ein-/Ausgabeeinheit und eine Anzeigeeinheit umfasst. Die Sensoreinheit erzeugt Rohmesswerte, wobei aus den Rohmesswerten die Information über die Prozessgröße ableitbar ist. Über die Ein-/Ausgabeeinheit werden Daten empfangen oder weitergeleitet. Auf der Anzeigeeinheit werden die von einer Steuereinheit bereitgestellten, die Prozessgröße repräsentierenden Informationen dargestellt. Die Kommunikation zwischen der Sensoreinheit, der Ein-/Ausgabeeinheit und der Anzeigeeinheit einerseits und der Steuereinheit erfolgt über einen der in der Automatisierungstechnik gebräuchlichen Feldbusse.

Die DE 10 2007 049 523 offenbart ein System zum Einsatz in der Prozessautomatisierung mit einer Vielzahl von intelligenten Sensoren. Diese Sensoren besitzen jeweils eine Webservice-Schnittstelle, über welche die Sensoren an eine Wide-Area-Network (WAN) oder ein Local-Area-Network (LAN) angeschlossen sind. Eine Kontrolleinheit oder ein Server, welche/r eine Software zum Generieren eines virtuellen Messumformers bereitstellt, kommuniziert mit den Sensoren über deren jeweilige Webservice-Schnittstelle.

Aus der WO 2004/038934 A1 ist ein räumlich verteilt angeordnetes Steuerungssystem bekannt, bei dem die verschiedenen Feldgeräte räumlich voneinander entfernt angeordnet sind und ihre Daten mittels einer Drahtlosdatenübertragungstechnik mit einer Basisstation austauschen.

Der Erfindung liegt die Aufgabe zugrunde, eine Vorrichtung und ein System zur Bestimmung, Optimierung oder Überwachung zumindest einer Prozessgröße einfach und damit kostengünstig auszugestalten.

Die erfindungsgemäße Vorrichtung weist die folgende Komponenten auf: Eine Messeinheit bzw. ein Messmodul mit einem Sensorelement und einer Messelektronik, zumindest einer von der Messeinheit entfernt angeordneten Regel-/Auswerte-/Recheneinheit und/oder einer von der Messeinheit und der Regel-/Auswerte-/Recheneinheit entfernt angeordneten Ein-/Ausgabeeinheit. Der Regel-/Auswerte-/Recheneinheit und/oder die Ein-/Ausgabeeinheit kommunizieren mit der erfindungsgemäßen Messvorrichtung über eine erste Schnittstelle und eine zweite Schnittstelle. Die Messelektronik steuert das Sensorelement an und leitet die Messsignale als unbearbeitete Rohmesswerte über die Schnittstellen an die Regel-/Auswerte-/Recheneinheit weiter. Die von der Messeinheit entfernt angeordnete Regel-/Auswerte-/Recheneinheit bestimmt, verbessert und/oder überwacht anhand der Rohmesswerte die Prozessgröße. Die Information über die Prozessgröße wird über die Ein-/Ausgabeeinheit verfügbar gemacht.

In der Messeinheit sind somit nur noch die Vorort für die Messwerterfassung unbedingt erforderlichen funktionalen Komponenten integriert, wie etwa im Falle eines Füllstandsmessgeräts die Signalerzeugungseinheit und die Sende-und Empfangseinheit für die Ultraschall- oder Mikrowellen-Messsignale. Die Aufbereitungs- und Weiterverarbeitungsfunktionen ebenso wie die Ein- und Ausgabefunktionen sind in eine zentralen Regel-/Auswerte-/Recheneinheit bzw. eine zentralen Ein-/Ausgabeeinheit ausgelagert. Die Regel-/Auswerte-/Recheneinheit ist bevorzugt so ausgestaltet, dass die von den unterschiedlichsten Messeinheiten gelieferten Rohmesswerte mit der korrekten Soft- und/oder Hardware aufbereitet und weiterverarbeitet werden können.

Gemäß einer bevorzugten Ausgestaltung der erfindungsgemäßen Vorrichtung ist die Messelektronik auf einem FPGA Chip oder auf einem dynamisch rekonfigurierbaren FPGA Chip oder auf einem ASIC oder auf einem Speicherbaustein realisiert. Darüber hinaus wird vorgeschlagen, dass die Regel-/Auswerte-/Recheneinheit auf einem FPGA Chip oder auf einem dynamisch rekonfigurierbaren FPGA Chip oder auf einem ASIC oder auf einem Speicherbaustein realisiert ist.

Wird ein dynamisch rekonfigurierbarer FPGA Chip verwendet, so können beispielsweise die funktionalen Soft- und/oder Hardwarekomponenten für die korrespondierende Messeinheit, die gerade die Rohmesssignale liefert, in Echtzeit konfiguriert werden. Hierdurch ist die Regel-/Auswerte-/Recheneinheit in hohem Maße flexibel an die jeweiligen Anforderungen anpassbar. Weiterhin wird es im Zusammenhang mit der erfindungsgemäßen Vorrichtung als vorteilhaft angesehen, wenn im Falle der Verwendung eines dynamisch rekonfigurierbaren FPGA Chips ein permanent konfigurierter Bereich vorgesehen ist, in dem ein Mikroprozessor permanent konfiguriert ist.

Bevorzugt ist die Regel-/Auswerte-/Recheneinheit auf einem Handbedientool oder einem Rechner oder - allgemein gesprochen auf einer ortsungebundenen Bedieneinheit realisiert. Beispielsweise kann ein Smart Phone oder ein Smart Pad oder eine sonstige ortsungebundene Bedieneinheit verwendet werden. Bevorzugt wird die Software für die Regel-/Auswerte-/Recheneinheit in Abhängigkeit von der jeweiligen Messeinheit als Apps bzw. als applikationsorientierte Softwareeinheit von einem Server heruntergeladen. Dieser Server wird beispielsweise von dem Gerätehersteller bereitgestellt. Diese Lösung hat den Vorteil, dass immer die aktuelle Version der Software in der Regel-/Auswerte-/Recheneinheit verfügbar ist.

Bevorzugt handelt es sich bei dem Server übrigens um eine WebServer, so dass der Zugriff über den Browser eines Rechners erfolgen kann. Es versteht sich von selbst, dass es sich bei dem Server jedoch um einen beliebigen Server handeln kann. So kann auch ein OPC-US Server eingesetzt werden.

Bezüglich des erfindungsgemäßen Systems wird die Aufgabe dadurch gelöst, dass eine Vielzahl von Messeinheiten mit der Regel-/Auswerte-/Recheneinheit über geeignete Kommunikationsverbindungen verbunden sind. Die Regel-/Auswerte-/Recheneinheit verarbeitet unter Nutzung der entsprechenden Auswerte-Hardware und/oder Auswerte-Software die von den unterschiedlichen Messeinheiten gelieferten Rohmesswerte weiter und bestimmt, verbessert und/oder überwacht die entsprechende Prozessgröße, über die die Messeinheit Information liefern soll.

Das erfindungsgemäße System zeigt u.a. Elemente eines Computer-Netwerks. In diesem Netzwerk finden sich Messvorrichtungen 1 für Prozessgrößen, wie sie zuvor bereits beschrieben wurden. Durch die erfindungsgemäße Lösung kann der Kunde sowohl auf die Vorort-Anzeige-Infrastruktur, also die sog. HMI (Human Machine Interface), als auch auf die entsprechende Infrastruktur betreffend Ein- und Ausgängen verzichten. Neben der Vorort-Infrastruktur für die Hardware kann darüber hinaus auch die Vorort-Infrastruktur für die Software verzichtet werden, was erhebliche Einsparungen mit sich bringt.

Die Vernetzung der einzelnen Systemkomponenten erfolgt vorteilhafter Weise über geeignete Kommunikationsverbindungen. Bei den Kommunikationsverbindungen handelt es sich entweder um drahtgebundene Verbindungen oder um drahtlose Verbindungen. Bevorzugt werden in dem erfindungsgemäßen System bereits vorhandene Netzinfrastrukturen, also insbesondere Internet- oder Intranetstrukturen verwendet. Somit kann die Regel-/Auswerte-/Recheneinheit, die u.a. die Information über die Prozessgröße unter Verwendung geeigneter Algorithmen bereitstellt, Teil eines üblichen PCs oder Laptops sein. Da entsprechende PCs und Laptops weltweit vorhanden sind, steht die von den Messeinheiten gelieferte und anschließend weiterverarbeitete Information im Prinzip an jedem beliebigen Ort zeitlich zur Verfügung. Entsprechendes gilt für die Ein-/Ausgabeeinheit, da jeder PC oder Laptop ebenso wie jedes Handbedientool an Display und eine Eingabemöglichkeit aufweist.

Weiterhin kann mittels der Regel-/Auswerte-/Recheneinheit beispielsweise ein Alarmmanagement, basierend auf Diagnoseprogrammen für die einzelnen Messeinheiten oder Teile des erfindungsgemäßen Systems, oder die Konfigurierung oder Parametrierung der Messeinheiten und/oder des Systems durchgeführt werden. Es versteht sich von selbst, dass die zuvor genannten Funktionalitäten auch auf mehrere Regel-/Auswerte-/Recheneinheiten, die sich an unterschiedlichen Standorten befinden, aufgeteilt sein können. Ebenso ist es möglich, die Informationen, die von unterschiedlichen Messeinheiten geliefert werden, in gewünschter Art und Weise miteinander zu verknüpfen um für den Kunden oder auch den Gerätehersteller einen Mehrwert zu generieren.

Somit wird erfindungsgemäß aus einem Transmitter, der einer jeden Messeinheit physisch zugeordnet ist, ein virtueller Transmitter, der durchaus auch in der Lage ist, mehrere bzw. eine Vielzahl von Messeinheiten in der gewünschten Art und Weise zu ergänzen. Darüber hinaus ist es möglich, von ganz unterschiedlichen Standorten Zugriff auf die Messeinheiten zu haben. Es versteht sich in diesem Zusammenhang von selbst, dass ggf. Maßnahmen zur Sicherstellung autorisierter Zugriffe auf die Messeinheiten oder auf das System ergriffen werden müssen. Gleiches gilt im Hinblick auf die Sicherheit bei der Datenübertragung.

Als besonders vorteilhaft wird es darüber hinaus erachtet, wenn eine Datenbank vorgesehen ist, in der eine Vielzahl von Datensätzen mit Rohmesswerten unterschiedlicher Messeinheiten und/oder mit weiterverarbeiteten Rohmesswerten von unterschiedlichen Messeinheiten gespeichert sind, wobei die Datensätze Rohmesswerte und/oder weiterverarbeitete Rohmesswerte widerspiegeln, die in Abhängigkeit von unterschiedlichen Prozess- und/oder Gerätebedingungen in unterschiedlichen Applikationen unmittelbar oder durch Simulation ermittelt worden sind. Jedem Datensatz mit Rohmesswerten und/oder weiterverarbeiteten Rohmesswerten ist ein Parametersatz zugeordnet, der eine optimierte Einstellung der entsprechenden Messeinheit und/oder der Regel-/Auswerte-/Recheneinheit in Abhängigkeit von definierten Prozess- und/oder Gerätebedingungen wiedergibt. Beispielsweise kann es sich bei den Parametern um Filtereinstellungen handeln.

Wie bereits zuvor erwähnt, ist darüber hinaus vorgesehen, dass für den Nutzer bzw. Anwender ein Mehrwert in Form einer Anreicherung von Informationen, von Know-how und/oder von Messdaten bereitgestellt wird. Dieser Mehrwert beruht auf den Informationen, die von ggf. unterschiedlichen ortsungebundene Bedieneinheiten auf Basis der Software für die Regel-/Auswerte-/Recheneinheit geliefert werden. Hierbei haben die Informationen im Normalfall einen Bezug zu den einzelnen Messeinheiten und sind gleichzeitig in Echtzeit verfügbar. Auf der Regel-/Auswerte-/Recheneinheit bzw. auf den Regel-/Auswerte-/Recheneinheiten sind entsprechende Apps bzw. applikationsorientierte Softwaretools installiert.

Alternativ sind die Regel-/Auswerte-/Recheneinheit bzw. auf die Regel-/Auswerte-/Recheneinheiten auf mindestens einem Computer installiert. Der Zugriff erfolgt dann beispielsweise über Java oder HTML. Weiterhin ist vorgesehen, dass sich die zumindest eine Regel-/Auswerte-/Recheneinheit die geeignete Software von einem Server via WebServices beschafft.

Wie bereits zuvor erwähnt, ist es im Zusammenhang mit der erfindungsgemäßen Lösung besonders vorteilhaft, wenn der virtuelle Transmitter, also die Regel-/Auswerte-/Recheneinheit, auf einem i-Phone, einem i-Pad oder einem sonstigen Handbedientool implementiert ist.

Die Erfindung wird anhand der nachfolgenden Figuren näher erläutert. Es zeigt:
Fig. 1: eine schematische Darstellung einer aus dem Stand der Technik bekannten Messvorrichtung,
Fig. 2: eine schematische Darstellung einer bevorzugten Ausgestaltung der erfindungsgemäßen Messvorrichtung,
Fig. 3: eine schematische Darstellung einer vorteilhaften Ausgestaltung des erfindungsgemäßen Systems und
Fig. 4: ein Flussdiagramm, das ein Verfahren zur Änderung der Konfiguration der erfindungsgemäßen Messvorrichtung beschreibt.

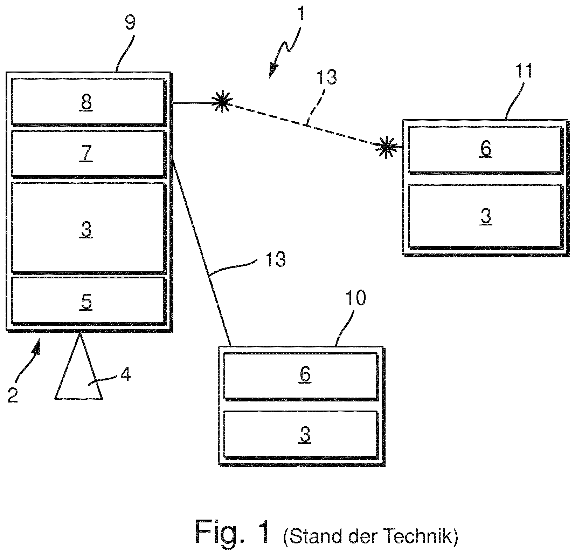

Fig. 1 zeigt eine schematische Darstellung einer Messvorrichtung 1, wie sie aus dem Stand der Technik bekannt geworden ist. Die Messvorrichtung 1 besteht aus einem Sensorelement 4, das so ausgestaltet ist, dass es eine gewünschte physikalische, chemische oder biologische Prozessgröße bestimmen kann, und einem Transmitter 9, der im gezeigten Fall eine Messelektronik 5, eine Regel-/Auswerte-/Recheneinheit 3, eine erste Schnittstelle 7 und eine zweiten Schnittstelle 8 aufweist. Über die Schnittstellen 7, 8 ist der Transmitter 9 mit einer lokalen Bedieneinheit, beispielsweise einem Handbedientool 10 verbunden. Weiterhin ist dem Handbedientool 10 im dargestellten Fall eine Regel-/Auswerte-/Recheneinheit 3 zugeordnet. Oftmals ist die lokale Bedieneinheit 10 bei bekannten Lösungen integraler Bestandteil der Messvorrichtung 1.

Über die zweite Schnittstelle 8 ist der Transmitter 9 mit einem entfernt angeordneten Rechner 11 verbunden. Dem Rechner 11 ist ebenso wie dem Handbedientool 10 eine Ein-/Ausgabeeinheit 6 und eine Regel-/Auswerte-/Recheneinheit zugeordnet. Die Kommunikationsverbindung 13 zwischen dem Transmitter 9 und der lokalen Bedieneinheit 10 bzw. dem Rechner 11 erfolgt entweder drahtgebunden oder drahtlos, z.B. über Wireless HART, einen der in der Automatisierungstechnik etablierten Feldbusse (HART, Fieldbus Foundation, Profibus, usw.)

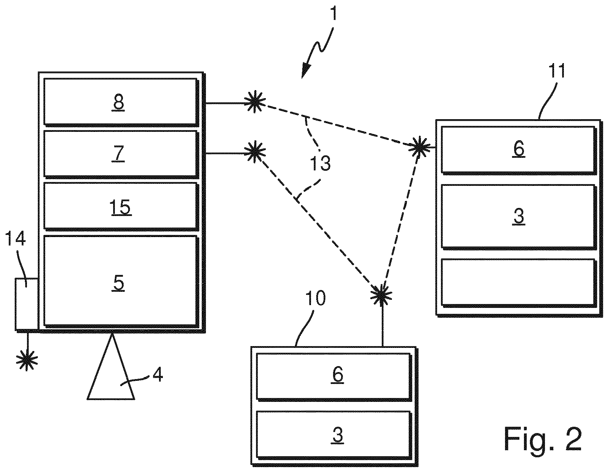

Fig. 2 zeigt eine schematische Darstellung einer bevorzugten Ausgestaltung der erfindungsgemäßen Messvorrichtung 1 zur Bestimmung, Optimierung oder Überwachung zumindest einer Prozessgröße.

Die Messvorrichtung 1 umfasst ein Sensorelement 4 und eine Messelektronik 5. Beide zusammen bilden die Messeinheit 2 bzw. das Messmodul 2. Entfernt von der Messeinheit 2 angeordnet, befindet sich die Regel-/Auswerte-/Recheneinheit 3 und/oder die von der Messeinheit 2 und ggf. der Regel-/Auswerte-/Recheneinheit 3 entfernt angeordnete Ein-/Ausgabeeinheit. Die Kommunikation zwischen der Messelektronik 5 bzw. der Messvorrichtung 1 und der Regel-/Auswerte-/Recheneinheit 3 und/oder der Ein-/Ausgabeeinheit 6 erfolgt über die Schnittstellen 7, 8. Die Messelektronik 5 steuert das Sensorelement 4 so an, dass die als Rohmesswerte vorliegenden Messsignale, die die Prozessgröße repräsentieren, über die Schnittstellen 7, 8 an die Regel-/Auswerte-/Recheneinheit 3 weitergeleitet werden. Erst in der entfernt von der Messeinheit 2 angeordnete Regel-/Auswerte-/Recheneinheit 3 wird anhand der Rohmesswerte die entsprechende Prozessgröße bestimmt, verbessert und/oder überwacht. Information über die Prozessgröße wird über die Ein-/Ausgabeeinheit 6 verfügbar gemacht.

Wie bereits an vorhergehender Stelle erwähnt, ist die Messelektronik 5 beispielsweise auf einem FPGA Chip, einem dynamisch rekonfigurierbaren FPGA Chip, einem ASIC oder einem Speicherbaustein realisiert. Ebenso kann die Regel-/Auswerte-/Recheneinheit 3 auf einem FPGA Chip, einem dynamisch rekonfigurierbaren FPGA Chip, einem ASIC oder einem Speicherbaustein realisiert sein.

Aus entsprechenden Anmeldungen der Anmelderin ist es bereits bekannt, dass bei Verwendung eines dynamisch rekonfigurierbaren FPGA Chips ein permanent konfigurierter Bereich vorgesehen ist, in dem ein Mikroprozessor permanent konfiguriert ist.

Die Regel-/Auswerte-/Recheneinheit 3 kann sowohl auf einem Handbedientool 10 als auch auf einem Rechner 11 installiert sein. Generell gesprochen kann sich die Regel-/Auswerte-/Recheneinheit 3 auf einer beliebigen ortsungebundene Bedieneinheit befinden. Bei dem Handbedientool 10 kann es sich beispielsweise um einen Laptop, ein iPhone oder ein iPad handeln. Der Rechner 11 kann z.B. ein PC oder ein iPad sein. Hierbei ist es besonders vorteilhaft, wenn die Software für die Regel-/Auswerte-/Recheneinheit 3 in Abhängigkeit von der verwendeten Messeinheit 2 als App oder als applikationsorientierte Softwareeinheit von einem Server 12 herunterladbar ist. Somit ist sichergestellt, dass stets die aktuelle Version der Software verfügbar ist. Die Identifikation der Messvorrichtung 1 bzw. der Messelektronik 4 erfolgt z.B. über ein RF-ID Tag.

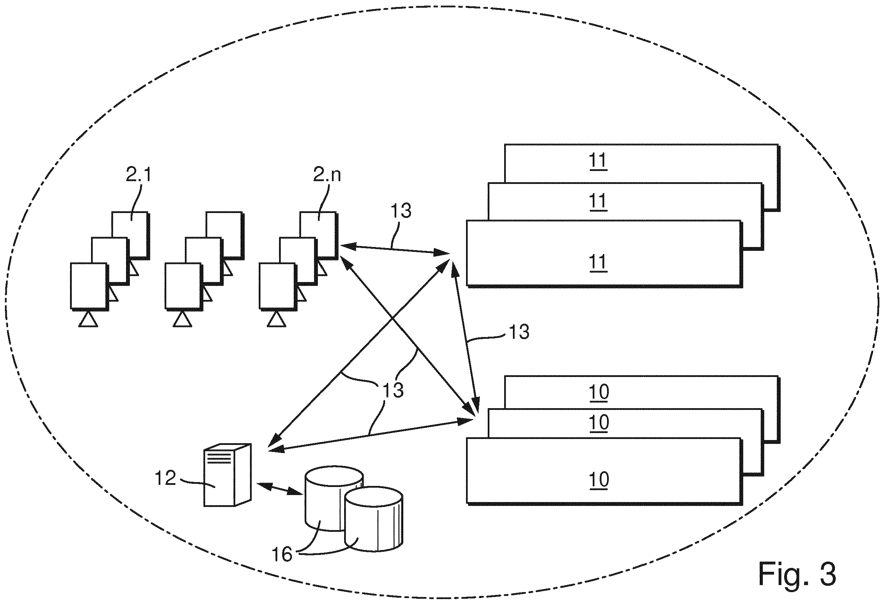

Fig. 3 zeigt eine schematische Darstellung einer vorteilhaften Ausgestaltung des erfindungsgemäßen Systems, bei dem eine Vielzahl der in Fig. 2 beschriebenen Messeinheiten 2.1, 2.n ihre Rohmesswerte an eine oder einige wenige entfernt angeordnete/n Regel-/Auswerteeinheit/en übertragen. Die Messeinheiten 2.1, 2.n sind beispielsweise in einer Automatisierungsanlage integriert; sie können aber ebenso gut an weit voneinander entfernten Standorten angeordnet sein. Zwecks Datenaustausch werden bevorzugt drahtlose Kommunikationsverbindungen 13 genutzt. Unter Nutzung der entsprechenden Auswerte-Hardware und/oder Auswerte-Software verarbeitet die Regel-/Auswerte-/Recheneinheit 3, die entweder einem Handbedientool 10 oder einem Rechner 11 zugeordnet ist, die von den unterschiedlichen Messeinheiten 2.1, 2.n gelieferten Rohmesswerte und bestimmt, verbessert und/oder überwacht die entsprechende Prozessgröße.
Über einen Server 12, bei dem es sich bevorzugt um einen WebServer handelt - dies ist vorteilhaft, da hierdurch die weit verbreitete Rechner-Infrastruktur genutzt werden kann, - kann die z.Zt. aktuelle Auswertesoftware heruntergeladen werden.

Weiterhin ist zumindest eine Datenbank 16 vorgesehen, in der eine Vielzahl von Datensätzen mit Rohmesswerten der unterschiedlichen Messeinheiten 2.1, . 2.n und/oder mit weiterverarbeiteten Rohmesswerten der unterschiedlichen Messeinheiten (2.1, . 2.n) gespeichert sind, wobei die Datensätze Rohmesswerte und/oder weiterverarbeitete Rohmesswerte widerspiegeln, die in Abhängigkeit von unterschiedlichen Prozess- und/oder Gerätebedingungen in unterschiedlichen Applikationen unmittelbar oder durch Simulation ermittelt worden sind. Bevorzugt ist jedem Datensatz mit Rohmesswerten und/oder weiterverarbeiteten Rohmesswerten ein Parametersatz zugeordnet, der eine optimierte Einstellung der entsprechenden Messeinheit 2.1, . 2.n und/oder der Regel-/Auswerte-/Recheneinheit 3 in Abhängigkeit von den definierten Prozess- und/oder Gerätebedingungen wiedergibt. Nähere Information zu dieser Lösung finden sich in der nicht vorveröffentlichten Deutschen Patentanmeldung DE 10 2010 044 182.1 der Anmelderin. Die entsprechenden Passagen sind integraler Bestandteil der vorliegenden Anmeldung.

Darüber hinaus eröffnet das erfindungsgemäße System die Möglichkeit, einen Mehrwert in Form einer Anreicherung von Informationen, Know-how und Messdaten zu erreichen. Der Mehrwert beruht auf den Informationen, die von den ortsungebundene Bedieneinheiten 10, 11 auf Basis der Software für die Regel-/Auswerte-/Recheneinheit 3 in Abhängigkeit von den einzelnen Messeinheiten 2.1, . 2.n geliefert werden, auf denen die Apps bzw. die applikationsorientierten Softwareeinheiten arbeiten. Dieser Mehrwert kann beispielsweise in der Durchführung von Advanced Diagnostics Funktionen bestehen. Weiterhin kann eine Optimierung des Energieverbrauchs in der Automatisierungsanlage einen wichtigen Mehrwert für den Nutzer bzw. Anlagenbetreiber darstellen. Wichtige Information für den Gerätehersteller und den Anlagenbetreiber stellen Wartungsinformationen dar.

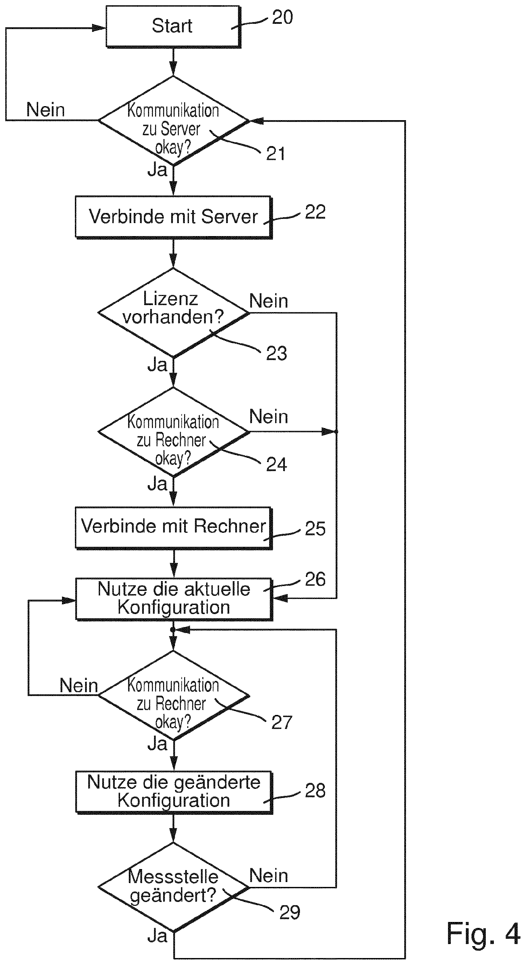

Fig. 4 zeigt ein Flussdiagramm, das ein bevorzugtes Verfahren zur Änderung des Konfigurationsdatensatzes für die Messelektronik 5 der erfindungsgemäßen Messvorrichtung 1 beschreibt.

Das Programm startet bei Programmpunkt 20. Unter dem Programmpunkt 21 wird überprüft, ob die Kommunikationsverbindung zu dem Server 12, hier einem Lizenz-Server, in Ordnung ist. Sobald die Kommunikationsverbindung steht (Programmpunkt 22), wird unter dem Programmpunkt 23 überprüft, ob die Berechtigung zum Zugriff auf den Lizenz-Server 12 vorliegt. Beispielsweise ist die Lizenz und/oder die Anzahl der herunterladbaren Konfigurationsdatensätze für die Messelektronik 5 der Messvorrichtung 1 der Seriennummer der Messvorrichtung 1 zugeordnet. Selbstverständlich kann die Lizenz auch nutzerbezogen vergeben werden. Die Lizenz wird bevorzugt jeweils für eine bestimmte Anzahl von Zugriffen auf den Lizenz-Server 12 vergeben. Solange die maximale Anzahl der erlaubten Zugriffe nicht überschritten wird, wird versucht, die Verbindung zu dem Rechner 11, bei dem es sich bevorzugt um einen Konfigurations-Server 11 handelt, herzustellen. Dargestellt sind die zuvor genannten Schritte unter den Programmpunkten 24, 25.

Ist die maximale Anzahl von erlaubten, lizenzierten Zugriffen überschritten, so arbeitet die Messvorrichtung 1 weiterhin mit der aktuellen, der Messvorrichtung 1 bislang zugeordneten Konfiguration der Messelektronik 5, bis eine entsprechende Lizenz vorliegt (Programmpunkt 26). Für den Fall, dass die Kommunikationsverbindung zu dem Konfigurationsserver 11 nicht aufgebaut werden kann, wird die Messvorrichtung 1 gleichfalls mit dem vorhandenen Konfigurationsdatensatz weiter betrieben. Aufgeführt ist dieser Schritt unter dem Programmpunkt 27.

Kann die Kommunikationsverbindung zu dem Konfigurationsserver 11 hergestellt werden, so wird unter dem Programmpunkt 28 ein geänderter Konfigurationsdatensatz für die Messelektronik 5 von dem Konfigurationsserver 11 herunter geladen und anschließend zum Betreiben der Messvorrichtung 1 genutzt. Der Konfigurationsdatensatz dient beispielsweise zum Programmieren des FPGA Chips. Sobald die Messvorrichtung 1 für eine geänderte Messstelle genutzt werden soll (z.B. Druckmessstelle anstelle einer Füllstandsmessstelle) springt das Programm auf den Programmpunkt 21 zurück. Erfolgt unter Programmpunkt 29 keine Änderung der Messstelle so versucht, so springt das Programm auf den Programmpunkt 27 zurück.

### Bezugszeichenliste

- 1: erfindungsgemäße Messvorrichtung
- 2: Messeinheit
- 3: Regel-/Auswerte-/Recheneinheit
- 4: Sensorelement
- 5: Messelektronik
- 6: Ein-/Ausgabeeinheit
- 7: erste Schnittstelle
- 8: zweite Schnittstelle
- 9: Transmitter
- 10: Handbedientool
- 11: Rechner
- 12: Server
- 13: Kommunikationsverbindung
- 14: RF-ID Tag
- 15: permanent konfigurierter Bereich
- 16: Datenbank

## Patentansprüche

1. System, bestehend aus einer Vielzahl von Messeinheiten (2.1, ... 2.n), die aus einem Sensorelement (4) und einer Messelektronik (5) bestehen, und zumindest einer von den Messeinheiten (2) entfernt angeordneten Regel/Auswerte/Recheneinheit (3) und einer von den Messeinheiten (2) und der Regel/Auswerte/Recheneinheit (3) entfernt angeordneten Ein/Ausgabeeinheit (6), wobei die Messelektronik (5) das Sensorelement ansteuert und die Messsignale als unbearbeitete Rohmesswerte über die Schnittstellen (7, 8) an die Regel/Auswerte/Recheneinheit (3) weiterleitet, wobei die Regel/Auswerte/Recheneinheit (3) unter Nutzung der entsprechenden Auswerte-Hardware und/oder Auswerte-Software die von den unterschiedlichen Messeinheiten (2.1, ... 2.n) gelieferten Rohmesswerte weiterverarbeitet und die entsprechende Prozessgröße bestimmt, verbessert und/oder überwacht und über die Ein/Ausgabeeinheit (6) verfügbar macht, wobei die Messeinheiten (2.1, ... 2.n) mit der Regel/Auswerte/Recheneinheit (3) über entsprechende Kommunikationsverbindungen (13) verbunden sind und wobei es sich bei den Kommunikationsverbindungen (13) um Internet-oder oder Intranetstrukturen handelt,
**dadurch gekennzeichnet,**
**dass** eine Datenbank (14) vorgesehen ist, in der eine Vielzahl von Datensätzen mit Rohmesswerten unterschiedlicher Messeinheiten (2.1, .... 2.n) und/oder mit weiterverarbeiteten Rohmesswerten der unterschiedlichen Messeinheiten (2.1, .... 2.n) gespeichert sind, wobei die Datensätze Rohmesswerte und/oder weiterverarbeitete Rohmesswerte widerspiegeln, die in Abhängigkeit von unterschiedlichen Prozess- und/oder Gerätebedingungen in unterschiedlichen Applikationen unmittelbar oder durch Simulation ermittelt worden sind, und wobei jedem Datensatz mit Rohmesswerten und/oder weiterverarbeiteten Rohmesswerten ein Parametersatz zugeordnet ist, der eine optimierte Einstellung der entsprechenden Messeinheit ((2.1, .... 2.n) und/oder der Regel/Auswerte/Recheneinheit (3) in Abhängigkeit von den definierten Prozess- und/oder Gerätebedingungen wiedergibt.

2. System nach Anspruch 1, wobei die Messelektronik (5) auf einem FPGA Chip oder auf einem dynamisch konfigurierbaren FPGA Chip oder auf einem ASIC oder auf einem Speicherbaustein realisiert ist.

3. System nach einem der Ansprüche 1 oder 2, wobei die Regel/Auswerte/Recheneinheit (3)) auf einem FPGA Chip oder auf einem dynamisch konfigurierbaren FPGA Chip oder auf einem ASIC oder auf einem Speicherbaustein realisiert ist.

4. System nach einem der vorherigen Ansprüche, wobei die Regel/Auswerte/Recheneinheit auf einem Handbedientool (10) oder einem Rechner (11) oder einer ortsungebundenen Bedieneinheit realisiert ist.

5. System nach dem vorherigen Anspruch, wobei es sich bei dem Handbedientool (10) um z.B. ein Smart Phone oder ein Smart Pad handelt.

6. System nach einem der vorherigen Ansprüche, wobei die Software für die Regel/Auswerte/Recheneinheit (3) in Abhängigkeit von der jeweiligen Messeinheit (2) als App oder als applikationsorientierte Softwareeinheit von einem Server (12) herunterladbar ist.

7. System nach einem der vorherigen Ansprüche, wobei die Regel/Auswerte/Recheneinheit (3) so ausgestaltet ist, dass sich die Regel/Auswerte/Recheneinheit (3) die Software von dem Server via WebServices beschafft.

8. System nach einem der vorherigen Ansprüche, wobei auf der Regel/Auswerte/Recheneinheit (3) ein Alarmmanagement implementiert ist.

9. Verfahren zur Konfiguration zumindest einer Messeinheit des Systems nach einem der Ansprüche 6 bis 8, umfassend folgende Schritte:
- Herstellen eine Kommunikationsverbindung zwischen der Messelektronik (5) der Messeinheit (2.1, ... 2.n) und dem Server;
- Herunterladen eines geänderten Konfigurationsdatensatzes; und
- Betreiben der Messeinheit (2.1, ... 2.n) auf Basis des geänderten Konfigurationsdatensatzes.

10. Verfahren nach Anspruch 9, wobei in dem Falle, dass die Kommunikationsverbindung zwischen der Messelektronik (5) der Messeinheit (2.1, ... 2.n) und dem Server nicht hergestellt werden kann, die Messeinheit (2.1, ... 2.n) mit einem vorhandenen Konfigurationsdatensatz weiter betrieben wird.

11. Verfahren nach einem der Ansprüche 9 oder 10, wobei der Server als Lizenz-Server betrieben wird, wobei die Berechtigung zum Zugriff auf den Lizenz-Server geprüft wird und eine Lizenz vergeben wird.

12. Verfahren nach Anspruch 11, wobei die Lizenz nutzerbezogen vergeben wird, die Lizenz für eine bestimmte Anzahl von Zugriffen auf den Server vergeben wird oder die Lizenz der Seriennummer der Messeinheit (2.1, ... 2.n) zugeordnet wird.

## Claims

1. System comprising multiple measuring units (2.1, ... 2.n), which consist of a sensor element (4) and measuring electronics (5), and at least of a control/evaluation/computation unit (3) arranged at a distance from the measuring units (2), and an input/output unit (6) arranged at a distance from the measuring units (2) and the control/evaluation/computation unit (3), wherein the measuring electronics (5) activates the sensor element and forwards the measuring signals as unprocessed raw measured values to the control/evaluation/computation unit (3) via the interfaces (7, 8),
wherein the control/evaluation/computation unit (3) processes the raw measured values delivered by the various measuring units (2.1... 2.n) further using appropriate evaluation hardware and/or evaluation software and determines, improves and/or monitors the corresponding process variable and makes it available via the input/output unit (6), wherein the measuring units (2.1... 2.n) are connected to the control/evaluation/computation unit (3) via corresponding communication connections (13) and wherein the communication connections (13) are Internet or intranet structures,
**characterized in that**
a database (14) is provided in which a large number of data records are saved with raw measured values from various measuring units (2.1, ... 2.n) and/or containing the raw measured values of the various measuring units (2.1, ... 2.n) that have been processed further, wherein the data sets reflect raw measured values and/or further processed raw measured values which have been determined in a variety of applications, either directly or via simulation, depending on various process and/or device conditions, and wherein a parameter set is assigned to every data record with raw measured values and/or further processed measured values, said parameter set reflecting an optimized setting for the corresponding measuring unit (2.1, ... 2.n) and/or the control/evaluation/computation unit (3) depending on the defined process and/or device conditions.

2. System as claimed in Claim 1, wherein the measuring electronics (5) are implemented on an FPGA chip or on a dynamically configurable FPGA chip or on an ASIC or on a memory module.

3. System as claimed in one of the Claims 1 or 2, wherein the control/evaluation/ computation unit (3) is implemented on an FPGA chip or on a dynamically configurable FPGA chip or on an ASIC or on a memory module.

4. System as claimed in one of the previous claims, wherein the control/evaluation/computation unit (3) is implemented on a handheld operating tool (10) or on a computer (11) or on a nomadic operating unit.

5. System as claimed in the previous claim, wherein the handheld operating tool (10) is a smart phone of smart pad, for instance.

6. System as claimed in one of the previous claims, wherein the software for the control/evaluation/computation unit (3) can be downloaded from the server (12) as an app or as an application-oriented software unit depending on the measuring unit (2) in question.

7. System as claimed in one of the previous claims, wherein the control/evaluation/computation unit (3) is designed in such a way that the control/evaluation/computation unit (3) obtains the software from the server via web services.

8. System as claimed in one of the previous claims, wherein an alarm management system is implemented in the control/evaluation/computation unit (3).

9. Procedure for configuring at least one measuring unit of the system as claimed in one of the Claims 6 to 8, comprising the following steps:
- Establishment of a communication connection between the measuring electronics (5) of the measuring unit (2.1, ... 2.n) and the server;
- Downloading of a modified configuration data record, and
- Operation of the measuring unit (2.1, ... 2.n) on the basis of the modified configuration data record.

10. Procedure as claimed in Claim 9, wherein in situations in which the communication connection cannot be established between the measuring electronics (5) of the measuring unit (2.1, ... 2.n) and the server, the measuring unit continues to be operated with an existing configuration data record.

11. Procedure as claimed in one of the Claims 9 or 10, wherein the server is operated as a license server, wherein the authorization to access the license server is checked and a license is granted.

12. Procedure as claimed in Claim 11, wherein the license granted is user-specific, the license is granted for a certain number of accesses to the server or the license is assigned to the serial number of the measuring unit (2.1, ... 2.n).

## Revendications

1. Système constitué d'un grand nombre d'unités de mesure (2.1, ... 2.n), qui se composent d'un élément capteur (4) et d'une électronique de mesure (5), et d'au moins une unité de régulation / d'exploitation / de calcul (3) disposée à distance des unités de mesure (2), et d'une unité d'entrée/sortie (6) disposée à distance des unités de mesure (2) et de l'unité de régulation / d'exploitation / de calcul (3), l'électronique de mesure (5) pilotant l'élément capteur et transmettant à l'unité de régulation / d'exploitation / de calcul (3), via les interfaces (7, 8), les signaux de mesure sous la forme de valeurs mesurées brutes non traitées,
pour lequel de l'unité de régulation / d'exploitation / de calcul (3) traite, à l'aide du matériel d'exploitation et du logiciel d'exploitation appropriés, les valeurs mesurées brutes fournies par les différentes unités de mesure (2.1, ... 2.n) et détermine, corrige et/ou surveille la grandeur de process concernée, et les rend disponible via l'unité d'entrée/sortie (6),
pour lequel les unités de mesure (2.1, ... 2.n) sont reliées avec l'unité de régulation / d'exploitation / de calcul (3) par l'intermédiaire de liaisons de communication (13) appropriées, et pour lequel il s'agit, concernant les liaisons de communication (13), de structures Internet ou Intranet,
**caractérisé**
**en ce qu'**est prévue une base de données (14), dans laquelle sont mémorisés un grand nombre de blocs de données contenant des valeurs mesurées brutes provenant des différentes unités de mesure (2.1, ... 2.n) et/ou contenant des valeurs mesurées brutes traitées des différentes unités de mesure (2.1, ... 2.n), les blocs de données reflétant les valeurs mesurées brutes et/ou les valeurs mesurées brutes traitées, qui ont été déterminées en fonction de différentes conditions de process et d'appareil, dans différentes applications, directement ou par simulation, et chaque bloc de données, contenant des valeurs mesurées brutes et/ou des valeurs mesurées brutes traitées, se voyant attribuer un jeu de paramètres reflétant un réglage optimisé de l'unité de mesure (2.1, ... 2.n) respective et/ou de l'unité de régulation / d'exploitation / de calcul (3) en fonction des conditions de process et/ou d'appareil définies.

2. Système selon la revendication 1, pour lequel l'électronique de mesure (5) est réalisée sur une puce FPGA ou sur une puce FPGA configurable dynamiquement ou sur un ASIC ou sur un module mémoire.

3. Système selon l'une des revendications 1 ou 2, pour lequel l'unité de régulation / d'exploitation / de calcul (3) est réalisée sur une puce FPGA ou sur une puce FPGA configurable dynamiquement ou sur un ASIC ou sur un module mémoire.

4. Système selon l'une des revendications précédentes, pour lequel l'unité de régulation / d'exploitation / de calcul (3) est réalisée sur un outil de commande portatif (10) ou sur un ordinateur (11) ou sur une unité de commande locale.

5. Système selon la revendication précédente, pour lequel il s'agit, concernant l'outil de commande portatif (10), par exemple d'un smartphone ou d'un smartpad.

6. Système selon l'une des revendications précédentes, pour lequel le logiciel relatif à l'unité de régulation / d'exploitation / de calcul (3) peut être téléchargé à partir d'un serveur (12), selon l'unité de mesure (2) concernée, en tant qu'application ou en tant qu'unité logicielle orientée application.

7. Système selon l'une des revendications précédentes, pour lequel l'unité de régulation / d'exploitation / de calcul (3) est conçue de telle sorte que l'unité de régulation / d'exploitation / de calcul (3) se procure le logiciel à partir du serveur via WebServices.

8. Système selon l'une des revendications précédentes, pour lequel une gestion d'alarmes est implémentée sur l'unité de régulation / d'exploitation / de calcul (3).

9. Procédé destiné à la configuration d'au moins une unité de mesure du système selon l'une des revendications 6 à 8, comprenant les étapes suivantes :
- Établissement d'une liaison de communication entre l'électronique de mesure (5) de l'unité de mesure (2.1, ... 2.n) et le serveur ;
- Téléchargement d'un bloc de données de configuration modifié, et
- Exploitation de l'unité de mesure (2.1, ... 2.n) sur la base du bloc de données de configuration modifié.

10. Procédé selon la revendication 9, pour lequel, au cas où la liaison de communication entre l'électronique de mesure (5) de l'unité de mesure (2.1, ... 2.n) et le serveur ne peut pas être établie, l'unité de mesure (2.1, ... 2.n) continue d'être exploitée avec un bloc de données de configuration existant.

11. Procédé selon l'une des revendications 9 ou 10, pour lequel le serveur est utilisé en tant que serveur de licences, l'autorisation d'accès au serveur de licences étant contrôlée et une licence étant attribuée.

12. Procédé selon la revendication 11, pour lequel la licence est attribuée d'une manière orientée utilisateur, la licence est attribuée pour un nombre déterminé d'accès au serveur ou la licence est assignée au numéro de série de l'unité de mesure (2.1, ... 2.n).
